# EUROPEAN PATENT APPLICATION

(11) **EP 1 768 078 A2**
(43) Date of publication of application: **28.03.2007**
(21) Application number: 06291474.2
(22) Date of filing: 20.09.2006
(51) Int. Cl.: G09B 15/00

(54) **Musical score displaying apparatus and program**

(30) Priority: 21.09.2005 JP 2005273137
(71) Applicant: CASIO COMPUTER CO., LTD., Shibuya-ku, Tokyo 151-8543 (JP)
(72) Inventor: Ito, Takato, Hamura-shi, 205-8555 Tokyo (JP); Minamitaka, Junichi, Hamura-shi, 205-8555 Tokyo (JP)
(74) Representative: Uchida, Kenji

(57) **Abstract**

A key of each measure is distinguished depending on performance data representing sounds composing a tune (step SB2). It is judged whether or not the distinguished key coincides with tonality data of the corresponding performance data, whereby it is judged whether or not the performance data is modulated with a key signature omitted (step SB3). A musical score corresponding to a portion which is not modulated with a key signature omitted is displayed in a normal manner (step SB4). Meanwhile, a musical score corresponding to a portion which is modulated with a key signature omitted is displayed in a specific displaying manner different from the normal displaying manner, such as in color different from the normal displaying manner and/or in a reversed displaying manner (step SB5), whereby a user can confirm the portion which has been modulated with a key signature omitted.

## Description

The present invention relates to a musical score displaying apparatus and a program, which are suitable for use with an electronic instrument having a function of displaying a musical score.

An apparatus for displaying a musical score is known. The musical score displays a musical score including key signatures and accidentals to be automatically placed to musical notes which need accidentals, based on tune data in SMF format, including MIDI Events representing musical notes composing a tune and Tonality Meta Events designating a key signature, and major key and minor key. This kind of apparatus is disclosed in JP 2002-268636 A (Patent Document), for instance.

In the apparatus which displays a key signature in a musical score in accordance with Tonality Meta Events included in tune data, as disclosed in the above Patent Document, if tune data includes Tonality Meta Events which effect frequent modulations, keys are displayed on the musical score every time modulation is made, whereby a correct musical score is displayed but such musical score becomes too disordered to read. When a short period is temporarily modulated, and/or a period before or after modulation is altered such that one key signature ("sharp" or "flat") is placed or so, a person who specialized in music often does not place (or alter) a key signature on a staff notation for easy viewing even if modulation is made.

Not to display a key signature which is to be placed on the staff notation, it is only necessary not to alter tonality data and to maintain a key unchanged as before the modulation is made. But since an accidental is distinguished depending on a key placed before modulation is made, the accidental is not always distinguished correctly.

For example, in the case where a key is G major before modulation is made and a sound corresponding to F#/Gbexists, the sound should be indicated with F#. Because scale notes in G major are "G, A, B, C, D, E, F#", and if it is determined that the sound is to be indicated with Gb, and a sound corresponding to G follows the sound, the sound has to be assigned with a natural signature, and a space between the first and second lines in staff notation cannot be used at all. In other words, in the case where a table for distinguish a sort of accidentals is defined such that a sound corresponding to F#/Gb in a key placed before modulation is made is to be indicated with Gb, the above problem can be caused.

Further, a person extremely specialized in music can instantly understand at first sight that modulation has been made with a key signature omitted, but an undesirable effect can be invited that a person not specialized in music cannot understand that a key signature has intentionally been omitted, and can be confused.

The present invention has been made in consideration of the above problem, and has an object to provide an apparatus and a computer program, which detect a portion in a tune modulated with a key signature omitted and advice a user of such modulated portion, and which can add accidentals to appropriate musical notes in the portion modulated with a key signature omitted.

According to one aspect of the present invention, there is provided a modulated portion displaying apparatus, which comprises a storing unit for storing performance data containing tonality data and representing sounds composing a tune, the tonality data representing a key, a reading unit for reading out performance data from the storing unit, a first judging unit for distinguishing a key assigned to each measure included in the tune based on the performance data read out by the reading unit, a second judging unit for judging whether or not the key of each measure distinguished by the first judging unit coincides with tonality data of the corresponding performance data, whereby it is judged whether or not a portion of the tune is modulated with a key signature omitted, and a musical score display controlling unit for, when the second judging unit determines that the portion of the tune is not modulated with a key signature omitted, displaying a musical score corresponding to the portion which is not modulated with a key signature omitted on a predetermined displaying unit in a normal displaying manner, and for, when the second judging unit determines that the portion is modulated with a key signature omitted, displaying a musical score corresponding to the portion which is modulated with a key signature omitted on the predetermined displaying unit in a specific displaying manner different from the normal displaying manner.

According to another aspect of the present invention, there is provided an accidental displaying apparatus, which comprises a first judging unit for distinguishing a key of each measure included in a tune based on performance data containing tonality data and representing sounds composing the tune, the tonality data representing a key, a second judging unit for judging whether or not each pieces of performance data needs an accidental, and an accidental displaying unit for, when the second judging unit determines that performance data needs an accidental, and tonality data of a measure including such performance data which needs an accidental and the key distinguished by the first judging unit do not coincide with each other, determining an accidental to be assigned to such performance data that needs an accidental, based on the key distinguished by the first judging unit, and displaying the determined accidental on a staff notation.

According to the present invention, a computer program stored on a recording medium, when loaded on an apparatus provided with a computer, can cause the computer to perform the above operation.

FIG. 1 is a block diagram illustrating a circuit configuration of an embodiment of the present invention.
FIG. 2 is a flow chart of a main routine operation.
FIG. 3 is a flow chart of a musical score displaying operation.
FIG. 4 is a flow chart of an accidental displaying operation.

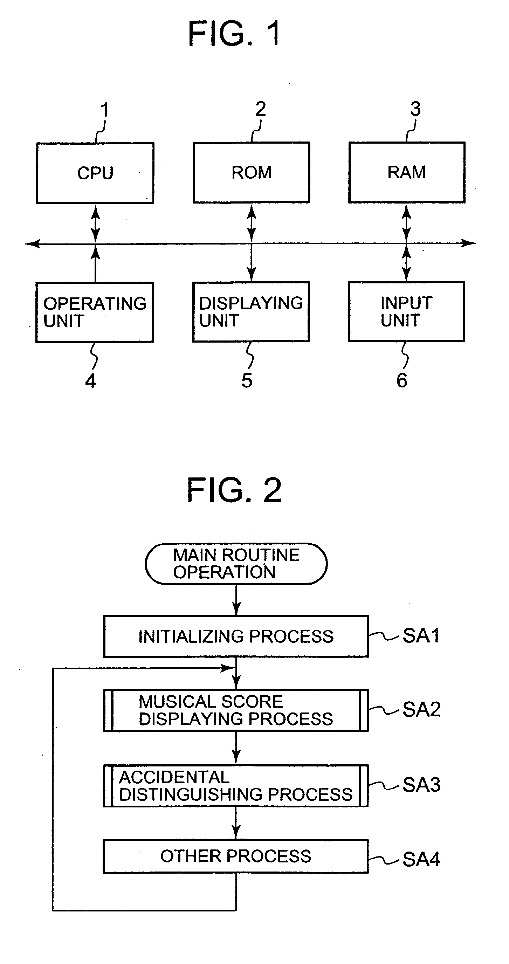

Now, embodiments of the present invention will be described with reference to the accompanying drawings.
A. Configuration
FIG. 1 is a block diagram showing the whole configuration of a musical score displaying apparatus according to an embodiment of the present invention. As shown in FIG. 1, the musical score displaying apparatus comprises CPU 1, ROM 2, RAM 3, operating unit 4, displaying unit 5 and input unit 6. CPU 1 controls operations of the components of the musical score displaying apparatus in response to a switch event generated by the operating unit 4, and distinguishing processing operation will be described in detail below. ROM 2 stores various sorts of control programs to be loaded on CPU 1. Such various sorts of control programs include a main routine process, musical score displaying process, and accidental distinguishing process.

RAM 3 has a data area and work area. On the data area of RAM 3, performance data which is entered through the input unit 6 is stored as will be described below. The performance data comprises data in SMF format, including MIDI Events representing musical notes composing a tune and Tonality Meta Events (tonality data) designating a key signature, and major key and minor key. On the work area of RAM 3 are temporarily stored various sorts of register flag data used in processes performed by CPU 1. The operating unit 4 has various operating switches and generates a switch event in response to a switching operation by a user. The operating unit 4 is provided with, for example, a tune selecting switch (not shown) for selecting performance data of a tune for displaying a musical score, and a tune input switch for instructing to store tune data input through the input unit 6 on the data area of RAM 3.

In response to a display control signal sent from CPU 1, the displaying unit 5 displays on its screen a musical score, key signatures, accidentals included in performance data of a selected tune. The input unit 6 is provided with, for example, an input interface and MIDI interface, and stores performance data in SMF format on the data area of RAM 3 through either of the input interface or MIDI interface under control of CPU 1.

B. Operation
Now, operation of the musical data displaying apparatus having the above configuration will be described with reference to FIG. 2 to FIG. 5. First, a main routine operation or whole operation of CPU 1 will be outlined below. Then, a musical score displaying operation and accidental displaying operation, both being included in the main routine operation, will be described.

(1) Operation of Main Routine
When a power is turned on in the apparatus, CPU 1 starts the main routine operation in accordance with the flow chart shown in FIG. 2. At step SA1, CPU 1 initializes various sorts of register flag data stored on the work area of RAM 3. CPU 1 executes the musical score displaying process at step SA2, where performance data of a designated tune is read in, and a portion of the tune which is modulated with a key signature omitted is detected based on the read in performance data, and then a musical score corresponding to the detected portion are displayed in a manner different from other portion.

Further, CPU 1 executes the accidental distinguishing process at step SA3, where a sound in the portion modulated with key signature omitted is assigned with an appropriate accidental, if necessary. CPU 1 executes other processes such as an instruction process, in which the input unit 6 is instructed to read in performance data of a tune designated by operation of the selection switch and tune input switch provided in the operating unit 4. Then, CPU 1 returns to step SA2, whereby CPU 1 repeatedly executes processes at steps SA2 to SA4.

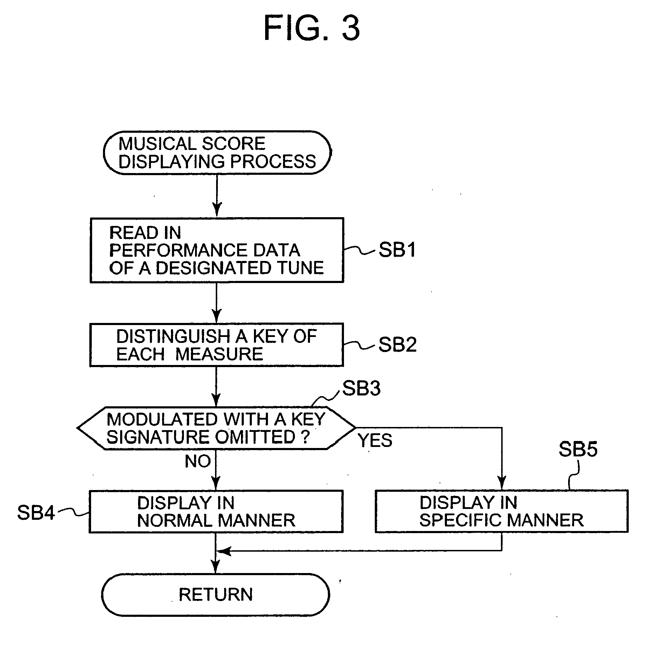

(2) Musical Score Displaying Operation
Now, the musical score displaying operation will be described with reference to FIG. 3. As described above, at step SA2 in the main routine operation (FIG. 2), CPU 1 executed the musical score displaying process. CPU 1 reads in the performance data of the designated tune at step SB 1 in FIG. 3. CPU 1 distinguishes a key of each measure included in the read in performance data at step SB2. CPU 1 distinguishes the key using a well known method, in which the key is distinguished based on information such as a pitch class of sounds played in each measure (refer to, for example, JP Sho58-114097 A, JP Hei01-167782 A, JP Hei04-163486 A, JP Hei05-061465 A, and JP Hei05-108073 A).

CPU 1 judges at step SB3 whether or not the key of the measure distinguished at step SB2 coincides with a key signature (tonality data included in the performance data), that is, CPU 1 judges at step SB3 whether or not the measure is modulated with a key signature omitted. When it is determined that the key of the measure distinguished at step SB2 coincides with the key signature and the measure is not modulated with a key signature omitted (NO at step SB3), CPU 1 displays a musical note of the performance data in a normal displaying manner at step SB4.

Meanwhile, it is determined that the key of the measure distinguished at step SB2 does not coincide with the key signature and the measure is modulated with a key signature omitted (YES at step SB3), CPU 1 displays a musical score corresponding to a portion which is not modulated with a key signature omitted in a normal displaying manner, and displays a musical score corresponding to a portion which is modulated with a key signature omitted in a specific displaying manner, such as in color different from the normal displaying manner or in a reversed displaying manner. Then, CPU 1 finishes the musical score displaying operation.

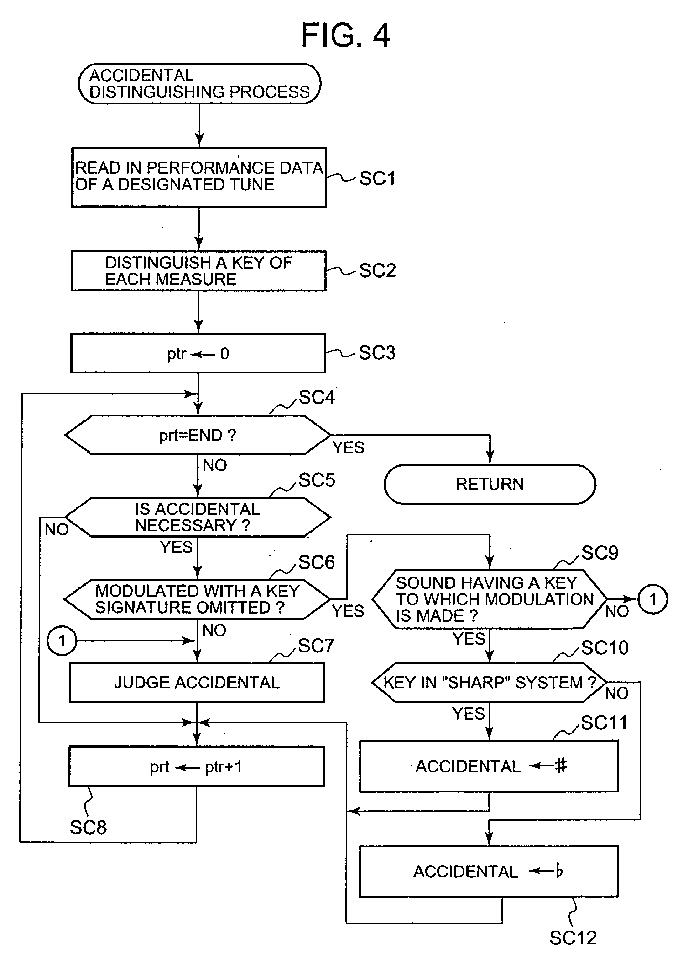

(3) Accidental Distinguishing Operation
Now, the accidental distinguishing operation will be described with reference to FIG. 4. As described above, at step SA3 in the main routine operation (FIG. 2), CPU 1 executed the accidental distinguishing process. CPU 1 reads in the performance data of the designated tune at step SC 1 in FIG. 4. In a similar manner as at step SB2 (FIG. 3), CPU 1 calculates at step SC2 concordance of a pitch class of sounds played in each measure with a scale of a key to be compared, thereby distinguishing a key of each measure, and obtains a judgment result of iKey [N].

CPU 1 resets a note pointer "ptr" for designating performance data to "0" at step SC3. At steps SC4 to SC8, advancing the note pointer "ptr" until the same reaches the end of a tune END, CPU 1 judges whether or not an accidental is necessary with respect to performance data designated by the note pointer "ptr". When it is determined that the accidental is necessary, an accidental is judged based on whether or not modulation is made with a key signature omitted.

More specifically, it is judged at step SC4 whether or not the note pointer "ptr" has reached the end of tune END. When the note pointer "ptr" has not reached the end of tune END (NO at step SC4), CPU 1 judges at step SC5 whether or not a pitch class of the performance data (target sound) designated by the note pointer "ptr" is identical to a scale note assigned with a key signature of the current measure, whereby it is judged whether an accidental is necessary or not.

The pitch class of the target sound is expressed by pit[ptr] mod12 (a reminder of the fundamental frequency of the target sound "pitch" divided by 12). An expression of iKeySig [N] expresses a tonic (tonality data) of a key signature assigned to the current measure, and an expression of iScale [N] expresses a scale note of a key signature assigned to the current measure. For example, in the case of a major key, iScale [N] expresses "1 (tonic), 0, 1, 0, 1, 1, 0, 1, 0, 1, 0, 1" , where 1 denotes a scale note, and 0 denotes a non-scale note).

CPU 1 calculates an expression of ((pit[ptr] mod 12) - ikeySig [N] + 12) mod12 at step SCS, whereby determining what number of sound from the tonic of the key placed to the current measure in units of half tone a pitch class of the target sound corresponds to. Then, the number of the sound is referred to iScale [N], and when "1" is obtained, CPU 1 determines that an accidental is necessary, and when "0" is obtained, CPU 1 determines that an accidental is not necessary. For example, when a key signature of the current measure is G Major (tonic is G) and a pitch of the target sound is C4 (pitch class is C), the calculation results in "5". Since a position of "5" (6^{th} position from the left end) in iScale [N] corresponds to "1", it is determined that an accidental is not necessary (NO at step SC5). Then, CPU 1 advances to step SC8, and increments the pointer "ptr", and then returns to step SC4. Meanwhile, when it is determined that the accidental is necessary (YES at step SC5), CPU 1 advances to step SC6.

At step SC6, CPU 1 judges whether or not the result of judgment stored in a register iKey [N] and a key signature iKeySig [N] coincide with each other. When the result of judgment iKey [N] and the key signature iKeySig [N] coincide with each other, CPU 1 determines that modulation is not made with a key signature omitted (NO at step SC6), and advances to step SC7.

CPU 1 performs the above accidental distinguishing operation at step SC7. That is, CPU 1 judges whether or not a sound of the same pitch as others in a measure is placed in the front side of the same measure, or whether or not a sound of the same pitch is found among composing sounds having a corresponding code. When a sound of the same pitch as others in the measure is found in the front side of the same measure, a sound having the same accidental as assigned to the found sound is selected, and when a sound of the same pitch is not found in the measure, CPU 1 judges whether or not a sound having a pitch different by a half tone from others in the measure is placed in the rear side of the same measure. When a sound having a pitch different by a half tone has been found, a sort of accidentals is selected, whose position does not overlap with other on a staff notation. (The above has been described by way of example, and the accidental distinguishing operation may be carried out using iKeySig [N], too.) After having finished the accidental distinguishing operation, CPU 1 increments the pointer "ptr" at step SC8, and returns to step SC4.

When it is determined that the result of judgment iKey [N] and the key signature iKeySig [N] do not coincide with each other, CPU 1 determines that modulation is made with a key signature omitted (YES at step SC6), and advances to step SC9. Thereafter, an accidental judgment according to the present invention is made at steps SC9 to SC12. More specifically, when modulation is made with a key signature omitted, CPU 1 judges at step SC9 whether or not a sound is identical to a scale note having the modulated key signature (judged key) based on a value of an expression of ((pit [ptr] mod12) - iKey [N] + 12) mod12. When it is determined that the sound is not identical to the scale note having the modulated key signature (NO at step SC9), CPU 1 advances to step SC7.

Meanwhile, when it is determined that the sound is identical to a scale note with the modulated key signature (YES at step SC9), CPU 1 advances to step SC10, where CPU 1 judges whether the result of the key judgment iKey [N] corresponds to either of sharp keys, i.e. "2(D)", "4(E)", "6(F#)", "7(G)", "9(A)" or "11(B)". When it is determined that the result of the key judgment iKey [N] corresponds to either of sharp keys (YES at step SC10), CPU 1 advances to step SC11, where CPU 1 selects a signature of "sharp" as an accidental. Then, CPU 1 advances to step SC8. Meanwhile, when it is determined that the result of the key judgment iKey [N] does not correspond to either of sharp keys (NO at step SC10), CPU 1 advances to step SC12, where CPU 1 selects a signature of "flat" as an accidental. Then, CPU 1 advances to step SC8.

As described above, it is judged whether or not an accidental is necessary for the performance data corresponding the note pointer as incremented successively. When it is determined that an accidental is necessary, it is judged whether or not modulation is made with a key signature omitted, and in this way, the accidental judgment is repeatedly made. When the note pointer "ptr" is incremented to the end of the tune END (YES at step SC4), the accidental judging process is terminated.

In the embodiment of the musical data displaying apparatus according to the present invention, a key is judged every measure, using performance data which represents sounds composing a tune, and it is judged whether or not the result of the key judgment coincides with tonality data of corresponding performance data, whereby it is judged whether or not modulation has been made with a key signature omitted. When it is determined that a portion of the tune is not modulated with a key signature omitted, a musical score corresponding to the portion which is not modulated is displayed in a normal displaying manner. Meanwhile, when it is determined that a portion of the tune is modulated with a key signature omitted, a musical score corresponding to the modulated portion is displayed in a special displaying manner, such as in color different form a normal displaying color or in highlighted state. As a result, a user is allowed to confirm the portion of the tune which is modulated with a key signature omitted.

Further, in the embodiment of the musical data displaying apparatus according to the present invention, a key is distinguished every measure based on performance data representing sounds composing a tune, and further it is judged whether or not an accidental is necessary with respect to each piece of performance data. With respect to performance data which is determined that it needs an accidental, when a tonality data of a measure including such performance data does not coincided with the key distinguished above, an accidental to be assigned to the performance data is determined depending on the distinguished key, and the determined accidental is displayed on a staff notation. Therefore, for example, when a key modulated with a key signature omitted is G major and a sound corresponding to F#/G b has been found, the sound is displayed with F# assigned. As a result, a sound in a portion which is modulated with a key signature omitted is assigned with an accidental according to need.

## Claims

1. A musical score displaying apparatus having a storing unit (3) for storing performance data containing tonality data and representing sounds composing a tune, the tonality data representing a key, and a reading unit (steps SB1, SC1) for reading out performance data from the storing unit, the musical score displaying apparatus for displaying a musical sore based on the read out performance data,
**characterized in that**
a first judging unit (steps SB2, SC2) distinguishes a key of each measure in the tune based on the performance data read out by the reading unit, and
a second judging unit (step SB3) judges whether or not the key of each measure distinguished by the first judging unit coincides with tonality data of the corresponding performance data, whereby it is judged whether or not a portion of the tune is modulated with a key signature omitted, and
when the second judging unit determines that the portion of the tune is not modulated with a key signature omitted, a musical score display controlling unit (steps SB4, SB5) displays a musical scale corresponding to the portion which is not modulated on a predetermined displaying unit in a normal displaying manner, and when the second judging unit determines that the portion is modulated with a key signature omitted, the musical score display controlling unit displays a musical score corresponding to the portion which is modulated on the predetermined displaying unit in a specific displaying manner different from the normal displaying manner.

2. The musical score displaying apparatus according to claim 1, wherein
when the second judging unit determines that the portion of the tune is modulated with a key signature omitted, the musical score display controlling unit displays a musical score corresponding to the portion which is modulated with a key signature omitted in color different from the normal displaying manner.

3. The musical score displaying apparatus according to claim 1, wherein
when the second judging unit determines that the portion of the tune is modulated with a key signature omitted, the musical score display controlling unit displays a musical score corresponding to the portion of the tune which is modulated with a key signature omitted in a reversed displaying manner different from the normal displaying manner.

4. The musical score displaying apparatus according to claim 1, further comprising:
a third judging unit (step SC5) for judging whether or not each piece of performance data needs an accidental; and
an accidental display controlling unit (steps SC6 to SC12) for, when the third judging unit determines that performance data needs an accidental, and tonality data of a measure including such performance data that needs an accidental does not coincide with the key distinguished by the first judging unit, determining an accidental to be assigned to the performance data that needs an accidental, based on the key distinguished by the first judging unit, and displaying the determined accidental on a staff notation displayed by the musical score display controlling unit.

5. The musical score displaying apparatus according to claim 4, wherein
a fourth judging unit (step SC9) for, when the tonality data of the measure including the performance data which needs an accidental and the key distinguished by the first judging unit do not coincide with each other, judging whether or not the performance data is identical to a scale note having a key signature to which the performance data is to be modulated;
a fifth judging unit (step SC10) for, when the fourth judging unit determines that the performance data is identical to the scale note having the key signature to which the performance data is to be modulated, judging whether or not the key signature to which the performance data is modulated corresponds to a key in a "sharp" system; and
a selecting unit (steps SC10, Sc11) for, when the fifth unit determines that the key signature to which the performance data is modulated corresponds to a key in a "sharp" system, selecting a "sharp" signature as the accidental, and for, when the fifth unit determines that the key signature to which the performance data is modulated does not correspond to a key in a "sharp" system, selecting a "flat" signature as the accidental.

6. A program for displaying a musical score, the program causing a computer to execute a displaying process comprising:
a reading process (steps SB1, SC1) for reading out from a recording unit (3) performance data containing tonality data and representing sounds composing a tune, the tonality data representing a key;
a first judging process (steps SB2, SC2) for distinguishing a key of each measure in the tune based on the performance data read out in the reading process;
a second judging process (step SB3) for judging whether or not the key of each measure distinguished in the first judging process coincides with tonality data of the corresponding performance data, whereby it is judged whether or not a portion of the tune is modulated with a key signature omitted;
a musical score displaying process (steps SB4, SB5) for, when it is determined in the second judging process that the portion of the tune is not modulated with a key signature omitted, displaying a musical score corresponding to the portion which is not modulated with a key signature omitted on a predetermined displaying unit (5) in a normal displaying manner, and for, when it is determined in the second judging process that the portion of the tune is modulated with a key signature omitted, displaying a musical score corresponding to the portion which is modulated with a key signature omitted on the predetermined displaying unit in a specific displaying manner different from the normal displaying manner.
